# EUROPÄISCHE PATENTSCHRIFT

(11) **EP 3 221 178 B1**
(45) Veröffentlichungstag und Bekanntmachung des Hinweises auf die Patenterteilung: **05.06.2019**
(21) Anmeldenummer: 15766825.2
(22) Anmeldetag: 21.09.2015
(51) Int. Cl.: B60L 11/18, H02J 7/02, H02J 50/10, H02J 50/90, H02J 50/60, B08B 5/02, B08B 1/00

(54) **VORRICHTUNG ZUR INDUKTIVEN ENERGIEÜBERTRAGUNG MIT EINER ÜBERWACHUNGSVORRICHTUNG**
DEVICE FOR TRANSFERRING ENERGY BY INDUCTION COMPRISING A MONITORING DEVICE
DISPOSITIF DE TRANSFERT D'ÉNERGIE PAR INDUCTION COMPORTANT UN DISPOSITIF DE SURVEILLANCE

(30) Priorität: 18.11.2014 DE 102014223532
(43) Veröffentlichungstag der Anmeldung: 27.09.2017
(73) Patentinhaber: Robert Bosch GmbH, 70442 Stuttgart (DE)
(72) Erfinder: MADER, Bernhard, 71394 Kernen (DE); HENKEL, Achim, 70563 Stuttgart (DE); SCHUMANN, Philipp, 70469 Stuttgart (DE)
(86) Internationale Anmeldenummer: PCT/EP2015/071599
(87) Internationale Veröffentlichungsnummer: WO 2016/078801

(56) Entgegenhaltungen:
- EP-A2- 0 788 212
- WO-A1-2014/038707

## Beschreibung

Die vorliegende Erfindung betrifft eine Vorrichtung zur induktiven Energieübertragung von mindestens einer Sendespule zu mindestens einer von der Sendespule beabstandeten Empfangsspule mit einer Vorrichtung zur Verbesserung der Kopplung bei vorliegendem Versatz zwischen der mindestens einen Sendespule und der mindestens einen Empfangsspule.

### Stand der Technik

Elektrofahrzeuge und Hybridfahrzeuge verfügen üblicherweise über einen elektrischen Energiespeicher, beispielsweise eine Traktions-Batterie, die die elektrische Energie für den Antrieb bereitstellt. Ist dieser elektrische Energiespeicher ganz oder teilweise entladen, so muss das Elektrofahrzeug eine Ladestation ansteuern, an der der Energiespeicher wieder aufgeladen werden kann. Bisher ist es hierzu üblich, dass an einer solchen Ladestation das Elektrofahrzeug mittels einer Kabelverbindung an die Ladestation angeschlossen wird. Diese Verbindung muss von einem Benutzer üblicherweise manuell hergestellt werden. Dabei ist es auch erforderlich, dass Ladestation und Elektrofahrzeug ein zueinander korrespondierendes Verbindungssystem aufweisen.

Ferner sind vereinzelt auch kabellose Ladesysteme für Elektrofahrzeuge oder Hybridfahrzeuge bekannt. Hierzu wird ein Elektrofahrzeug über einer Spule bzw. einem Ladepad oder Ladevorrichtung abgestellt. Diese Spule sendet ein magnetisches Wechselfeld aus. Das magnetische Wechselfeld wird von einer Empfangsspule innerhalb des Fahrzeugs aufgenommen und in elektrische Energie umgewandelt. Mittels dieser elektrischen Energie kann daraufhin eine Traktions-Batterie des Fahrzeugs geladen werden. Die Druckschrift DE 10 2011 010 049 A1 offenbart ein solches System zum Laden einer Fahrzeugbatterie, bei dem die Energie induktiv übertragen wird.

Die WO 2014/038707 A1 beschreibt eine Vorrichtung zum Aufladen eines Fahrzeugs mit einer Sende- und einer Empfangsspule, wobei das Fahrzeug auf einer mobilen Transporteinheit angeordnet werden kann und die mobile Transporteinheit mit dem darauf angeordneten Fahrzeug an eine induktiven Aufladestation ankoppeln kann.

Die EP 0 788 212 A2 beschreibt ein Verbindungssystem für eine Aufladeeinrichtung an einem elektrischen Fahrzeug, welches eine Primärspule mit einer Sekundärspule an einem Fahrzeug in Kontakt bringt.

Weiterhin kann der Energiespeicher des Elektrofahrzeugs auch zur Rückspeisung verwendet werden. Hierzu kann ebenfalls eine Kabelverbindung oder auch eine induktive Energie- bzw. Leistungsübertragung verwendet werden. Bei dem kabellosen Laden einer Batterie eines Elektrofahrzeuges gibt es immer eine feste Geometrie der Sendespule. Sie wird dabei für die Verwendung im Parkplatz oder in einigen Systemen in der Fahrbahn integriert und optimiert. Der Raum zwischen den Spulen ist in der Regel Luft. Nachteil dieser Konfiguration ist, dass der magnetische Kopplungsfaktor zwischen den beiden Spulen recht klein ausfällt, woraus eine hohe Blindleistung in der Leistungselektronik der Übertragung zu bewältigen ist.

Es besteht daher ein Bedarf einer Vorrichtung, durch die der Kopplungsfaktor zwischen den Spulen des induktiven Ladesystems verbessert wird.

### Offenbarung der Erfindung

Die erfindungsgemäße Vorrichtung mit dem Kennzeichen des Anspruchs 1 hat den Vorteil, dass der Kopplungsfaktor zwischen den Spulen des induktiven Ladesystems verbessert wird.

Erfindungsgemäß ist dazu eine Vorrichtung zur induktiven Energieübertragung für ein Fahrzeug vorgesehen, wobei die induktive Energieübertragung von mindestens einer Sendespule zu einer von der mindestens einen Sendespule beabstandeten mindestens einen Empfangsspule des Fahrzeugs erfolgt, wobei zwischen der mindestens einen Sendespule und der mindestens einen Empfangsspule ein Feldkonzentrator angeordnet ist. Vorteilhafterweise führt der Feldkonzentrator dazu, dass der Kopplungsfaktor zwischen den beiden Spulen verbessert wird und innerhalb eines großen Toleranzbereichs möglichst unabhängig von der relativen Positionierung der Sendespule und der Empfangsspule ist. Der zu tolerierende Versatz kann dabei sowohl lateral als auch in der Höhe sein. Durch den Feldkonzentrator können sowohl größere Toleranzen beim Einparken als auch unterschiedliche Bodenfreiheiten von verschiedenen Fahrzeugtypen oder Beladezustände vorteilhaft kompensiert werden.

Durch die in den abhängigen Ansprüchen genannten Maßnahmen sind vorteilhafte Weiterbildungen des in dem unabhängigen Anspruch angegebenen Verfahrens möglich.

Der Feldkonzentrator ist mobil ausgeführt. Durch die mobile Ausführung kann das magnetische Feld besser auf die Fahrzeugspule konzentriert werden. Der Feldkonzentrator ist dabei vorteilhaft ein mobiler Untersatz analog zu einem mobilen Roboter, mittels dessen der Versatz zwischen Fahrzeug- und Bodenspule bestmöglich kompensiert werden kann. Durch die Mobilität und die damit verbundene Kompensation des Versatzes, wird der Kopplungsfaktor zwischen den Spulen deutlich verbessert.

Weiterhin erfasst der Feldkonzentrator über mindestens einen Sensor eine Position des Fahrzeugs erfasst. Der Sensor trägt dazu bei, dass sich der Feldkonzentrator die optimale Position unter dem Fahrzeug sucht und damit die Varianz des Kopplungsfaktors so gering wie möglich hält.

In einer weiteren vorteilhaften Ausführungsform ist der mindestens eine Sensor ein optischer Sensor, ein induktiver Sensor, ein Radarsensor, ein Ultraschallsensor oder ein kapazitiv arbeitender Sensor. Sämtliche Sensoren erlauben die präzise Erfassung des Fahrzeugs. Alternativ nutzt ein interner Sensor das Übertragungsmagnetfeld zur Selbstausrichtung.

Vorteilhaft ist der Feldkonzentrator so zwischen der mindestens einen Sendespule und der mindestens einen Empfangsspule positioniert, dass die Varianz des Kopplungsfaktors zwischen den Spulen so gering wie möglich ist.

Als Folge des verbesserten Kopplungsfaktors sinkt auch die Streufeldstärke außerhalb des Übertragungsvolumens.

In einer weiteren vorteilhaften Ausführungsform ist der Feldkonzentrator mit einer Hubeinheit ausgestattet. Die Hubeinheit ermöglicht die Anpassung an unterschiedliche Spulenabstände zwischen der mindestens einen Sendespule und der mindestens einen Empfangsspule.

Weiterhin ist vorteilhaft, den Feldkonzentrator asymmetrisch auszuführen. Die Asymmetrie wird ausgenutzt, um durch geeignete Rotation und laterale Bewegungen den Parkversatz des Fahrzeugs relativ zur Bodenspule / Sendespule zu kompensieren. Somit kann ein leicht versetzt parkendes Fahrzeug trotz des Versatzes effektiv geladen werden.

Des Weiteren weist der Feldkonzentrator eine Vorrichtung zur Reinigung auf, und optional eine Vorrichtung zur Abdichtung, wobei vorzugsweise flexible Lippen, Bürsten oder ein Luftschwert zum Einsatz kommen. Bei dem kabellosen Laden des Fahrzeugs befindet sich zwischen der Sendespule der Ladestation und der Empfangsspule in dem Fahrzeug ein Luftspalt. Aufgrund der erforderlichen Bodenfreiheit von Kraftfahrzeugen beträgt dieser Luftspalt einige Zentimeter. Luftspalte in der Größe von 10-25 cm sind dabei sehr verbreitet. Aufgrund der starken magnetischen Felder, die mit relativ hohen magnetischen Flussdichten auftreten, muss gewährleistet werden, dass Lebewesen durch den Einsatz des Systems nicht gefährdet werden und Fremdkörper wie metallische Gegenstände nicht oder nicht zu stark erhitzt werden. Fremdkörper bzw. Lebewesen müssen also aus dem Luftspalt entfernt werden bzw gehindert werden, in den Luftspalt der beiden Spulen zu geraten. Zu diesem Zweck wird über die flexiblen Lippen eine Abdichtung erzeugt bzw. durch Bürsten oder ein Luftschwert der Luftspalt gereinigt.

Vorteilhaft verfügt der Feldkonzentrator über mindestens eine Aufladespule, über die mindestens eine eigene Batterie geladen werden kann. Der Feldkonzentrator verfügt somit über eigene Empfängerspulen, um aus dem Wechselfeld Energie für die Aufladung seiner eigenen Batterie zu beziehen und somit unabhängig von einer externen kabelgebundenen Stromzufuhr zu sein.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der Erfindung zu verlassen. Weitere Merkmale und Vorteile von Ausführungsformen der Erfindung ergeben sich aus der nachfolgenden Beschreibung in Bezug auf die beigefügten Zeichnungen.

### Kurze Beschreibung der Zeichnungen

Es zeigen:
- Fig. 1:: eine schematische Darstellung eines Fahrzeugs und einer Vorrichtung zur induktiven Energieübertragung inklusive Feldkonzentrator;
- Fig. 2:: eine weitere schematische Darstellung eines Fahrzeugs und einer Vorrichtung zur induktiven Energieübertragung inklusive asymmetrischem Feldkonzentrator;
- Fig. 3:: eine schematische Darstellung eines Feldkonzentrators

Die in den Figuren dargestellten Zeichnungen sind aus Gründen der Übersichtlichkeit nicht notwendigerweise maßstabsgetreu abgebildet. Gleiche Bezugszeichen bezeichnen im Allgemeinen gleichartige oder gleichwirkende Komponenten.

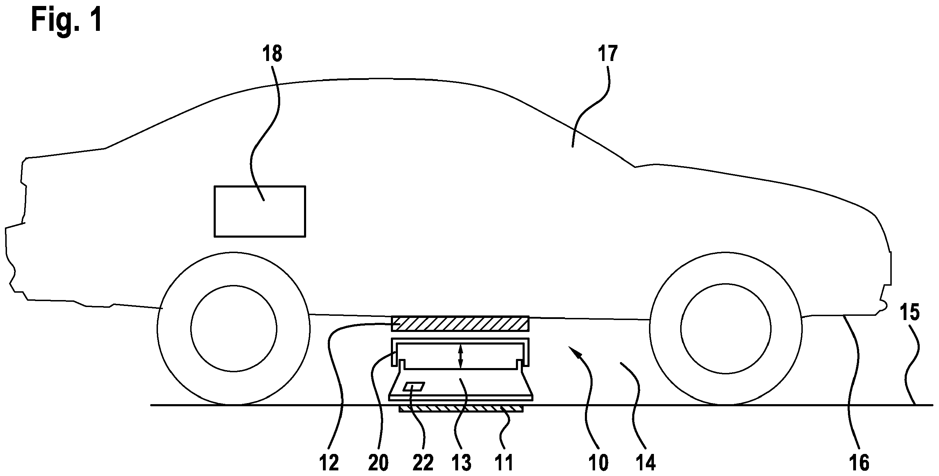

Figur 1 zeigt ein Fahrzeug 17, das über einer Vorrichtung zur induktiven Energieübertragung 10 (induktiven Ladestation) abgestellt ist. Das Fahrzeug 17 ist dabei so abgestellt, dass die Empfangsspule 12 des Fahrzeugs 17 weitestgehend über der Sendespule 11 angeordnet ist. Aufgrund der erforderlichen Bodenfreiheit des Fahrzeugs 17 besteht dabei zwischen dem Boden 15, in dem die Sendespule 11 angeordnet ist bzw. auf dem die Sendespule 11 z.B. als Ladepad aufgelegt ist und dem Fahrzeugunterboden 16 des Fahrzeugs 17, in dem sich die Empfangsspule 12 befindet, ein Zwischenraum 14 mit einem Luftspalt. Dieser Zwischenraum 14 mit dem Luftspalt kann dabei mehrere Zentimeter betragen. Bei heute üblichen Fahrzeugtypen sind Luftspalte zwischen 10 und 25 cm zu erwarten. Aber auch andere Größen für den Zwischenraum zwischen Boden 15 und Fahrzeugunterseite sind ebenso möglich. Dieser Zwischenraum 14 ist dabei normalerweise frei zugänglich. Parkt das Fahrzeug 17 nicht präzise über der Sendespule 11 und gibt es somit einen Versatz zwischen der Sendespule 11 und der Empfangsspule 12, resultiert ein schlechter magnetischer Kopplungsfaktor. Er ist zwischen den beiden Spule 11 und 12 relativ klein. Daraus folgt ein hoher zu bewältigender Anteil Blindleistung in der Leistungselektronik der Übertragung. Zu diesem Zweck wird ein Feldkonzentrator 13 eingesetzt, um das magnetische Feld zwischen Sendespule 11 und Empfangsspule 12 besser auf die Empfangsspule 12 konzentrieren zu können. Der Feldkonzentrator 13 ist als mobiler Untersatz bzw. mobiler Roboter (vergleichbar mit bekannten Staubsaugerrobotern) ausgeführt und stellt einen Adapter zwischen Sendespule 11 und Fahrzeugspule 12 dar, um den Luftspalt bzw. Zwischenraum 14 zu überbrücken und die Position des Fahrzeugs 17 bei Versatz auszugleichen. Der Feldkonzentrator 13 besteht aus einem magnetisch gut leitenden Material, dass das Magnetfeld zwischen der Sendespule 11 und der Empfangsspule 12 auf die Empfangsspule 12 bündelt. Zur Kompensation des Parkversatzes wird das Magnetfeld lateral so geführt, dass es auch bei Versatz eine hohe Kopplung erreicht. Der Feldkonzentrator 13 ist wahlweise größer als die Bodenplatte bzw. das Ladepad 19 bzw. die Sendespule 11 ausgeführt. Weiterhin ist der Feldkonzentrator mit einer Hubeinheit 20 versehen, die eine Anpassung an unterschiedliche Spulenabstände ermöglicht. Weiterhin ist der Feldkonzentrator 13 mit einem Sensor 22 bzw. Sensoren 22 ausgestattet, über die die Fahrzeugposition des Fahrzeugs 17 erfasst wird, um den Versatz zwischen Sendespule (bzw. Bodenspule) 11 und Empfangsspule (bzw. Fahrzeugspule) 12 bestmöglich zu kompensieren, sodass sich der Feldkonzentrator 13 die optimale Position unter dem Fahrzeug 17 sucht und damit die Varianz des Kopplungsfaktors so gering wie möglich hält. Durch die Ausfüllung des Luftspaltes bzw. Zwischenraums 14 unter dem Fahrzeug 17 mit dem Feldkonzentrator 13 wird auch die Gefahr von Fremdobjekten, die während des Ladevorgangs in das Magnetfeld gelangen, minimiert. Zusätzlich wird im induktiven Ladesystem 10 der Aufwand zur positionstoleranten Auslegung in den Übertragungsspulen und der Leistungselektronik reduziert. Als Folge des verbesserten Kopplungsfaktors sinkt auch die Streufeldstärke außerhalb des Übertragungsvolumens.

Nachdem das Fahrzeug 17 so abgestellt wurde, dass die Empfangsspule 12 in dem Fahrzeug 17 sich über der Sendespule 11 befindet, kann das Aufladen der Traktionsbatterie 18 beginnen. Hierzu erzeugt die Sendespule 11 ein magnetisches Wechselfeld. Dieses magnetische Wechselfeld wird von der Empfangsspule 12 aufgenommen und in elektrische Energie umgewandelt. Diese elektrische Energie steht daraufhin zum Aufladen der Traktionsbatterie 18 zur Verfügung. Für eine Rückspeisung elektrischer Energie vom Fahrzeug 17 in ein Energieversorgungsnetz kann auch umgekehrt die Spule im Fahrzeug 17 als Sendespule dienen, die ein magnetisches Feld erzeugt. Die Spule in der Ladestation arbeitet dann als Empfangsspule, die die Energie des magnetischen Felds empfängt und in elektrische Energie umwandelt. Diese elektrische Energie kann daraufhin in ein Energieversorgungsnetz eingespeist werden.

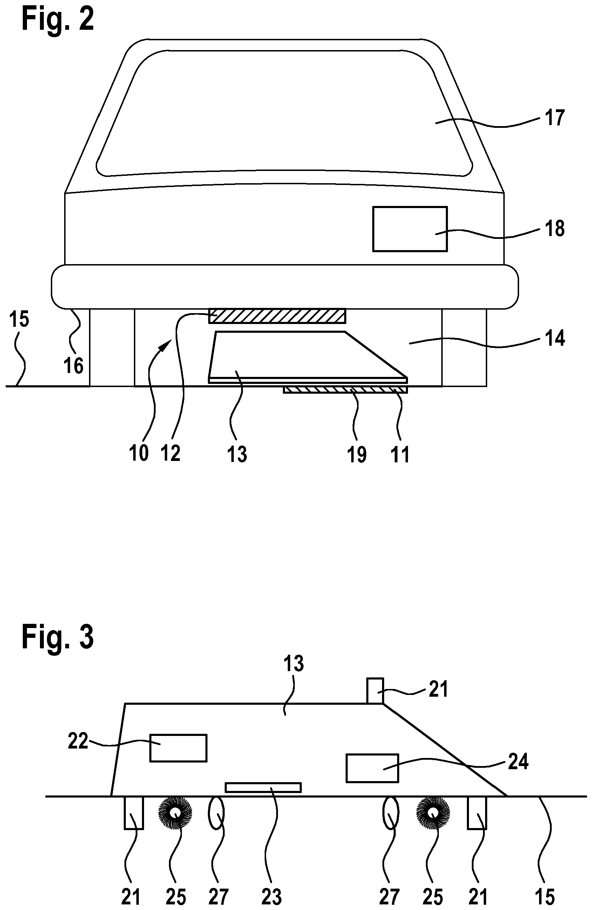

Figur 2 zeigt eine schematische Darstellung eine alternative Ausführungsform der Vorrichtung 10 zur induktiven Energieübertragung. Gleiche Elemente in Bezug auf Fig. 1 sind mit gleichen Bezugszeichen versehen und werden nicht näher erläutert. In dieser Fig. 2 ist der Feldkonzentrator 13 asymmetrisch ausgeführt und kann durch geeignete Rotation und laterale Bewegung den Parkversatz kompensieren.

Figur 3 zeigt eine schematische Darstellung des Feldkonzentrators 13. Gleiche Elemente in Bezug auf Fig. 1 bzw. Fig. 2 sind mit gleichen Bezugszeichen versehen und werden nicht näher erläutert. Um während der induktiven Energieübertragung von der Sendespule 11 zu der Empfangsspule 12 sicherzustellen, dass sich in dem Zwischenraum 14 keinerlei unerwünschte Objekte (Gegenstände wie z.B. Metalle, Folien, etc. oder Lebendobjekte wie z.B. Tiere, ect.) befinden, ist der Feldkonzentrator 13 mit Reinigungsvorrichtungen 25 wie z.B. Bürsten oder Luftschwert ausgestattet. Weiterhin weist er Vorrichtungen zur Abdichtung 21 des Luftspaltes bzw. Zwischenraums 14 auf. Zusätzlich verfügt der Feldkonzentrator 13 über einen Fortbewegungsmechanismus 27 zur selbstständigen Positionierung. Dies können Räder, Achsen, Walzen, etc. sein. Der Feldkonzentrator verfügt über einen Sensor 22 bzw. Sensoren 22, mittels derer er die optimale Position findet. Diese Sensoren können sich entweder an dem Fahrzeug 17 oder der Empfangsspule 12 des Fahrzeugs 17 ausrichten. Es können optische, induktive, Ultrabreitbandradar-, Radar-, RFID-, Ultraschall- oder kapazitive Sensoren eingesetzt werden. Alternativ kann der Sensor 22 intern verbaut werden und das Übertragungsmagnetfeld zwischen der Sendespule 11 und der Empfangsspule 12 zur Selbstausrichtung verwenden. Eine weitere Möglichkeit ist die Lagesteuerung des Feldkonzentrators 13 durch die Regelung der Sendespule 11 und Empfangsspule 12 derart, dass die übertragene Leistung maximiert wird. Der Feldkonzentrator kann zudem über eine eigene Aufladespule 23 verfügen, um aus dem sich beim Aufladevorgang aufbauenden Magnetfeld Energie für die Aufladung seiner eigenen Batterie 24 bzw. Feldkonzentratorbatterie 24 zu beziehen.

Der Feldkonzentrator 13 kann für mehrere Ladeplätze mit mehreren Vorrichtungen zur induktiven Energieübertragung 10 verwendet werden. Die Ladeplätze sind vorteilhaft in Reihe angeordnet und werden zeitlich gestaffelt alle von einem oder von wenigen Feldkonzentratorenen 13 bedient.

## Patentansprüche

1. Vorrichtung zur induktiven Energieübertragung (10) für ein Fahrzeug (17) von mindestens einer Sendespule (11) zu einer von der mindestens einen Sendespule (11) beabstandeten mindestens einen Empfangsspule (12) des Fahrzeugs (17), **dadurch gekennzeichnet, dass** zwischen der mindestens einen Sendespule (11) und der mindestens einen Empfangsspule (12) ein Feldkonzentrator (13) angeordnet ist, wobei der Feldkonzentrator (13) mobil ausgeführt ist und einen Sensor (22) umfasst, über welchen die Position des Fahrzeugs (17) durch den Feldkonzentrator (13) erfassbar ist, und der Feldkonzentrator (13) eine Vorrichtung zur Reinigung (25) aufweist, wobei mittels der Vorrichtung zur Reinigung (25) sichergestellt wird, dass sich in dem Zwischenraum (14) zwischen Feldkonzentrator (13) und Empfangsspule (12) des Fahrzeugs (17) keine unerwünschten Objekte befinden wie z.B. Metalle, Folien oder Tiere.

2. Vorrichtung nach einem der vorhergehenden Ansprüche, **dadurch gekennzeichnet, dass** der mindestens eine Sensor (22) ein optischer Sensor, ein induktiver Sensor, ein Radarsensor, ein Ultraschallsensor oder ein kapazitiv arbeitender Sensor ist.

3. Vorrichtung nach einem der vorhergehenden Ansprüche, **dadurch gekennzeichnet, dass** der Feldkonzentrator (13) so zwischen der mindestens einen Sendespule (11) und der mindestens einen Empfangsspule (12) positioniert wird, dass die Varianz des Kopplungsfaktors zwischen der mindestens einen Sendespule (11) und der mindestens einen Empfangsspule (12) so gering wie möglich ist.

4. Vorrichtung nach einem der vorhergehenden Ansprüche, **dadurch gekennzeichnet, dass** der Feldkonzentrator (13) mit einer Hubeinheit (20) ausgestattet ist.

5. Vorrichtung nach einem der vorhergehenden Ansprüche, **dadurch gekennzeichnet, dass** der Feldkonzentrator (13) asymmetrisch ausgeführt ist.

6. Vorrichtung nach einem der vorhergehenden Ansprüche, **dadurch gekennzeichnet, dass** die Vorrichtung zur Reinigung (25) eine Vorrichtung zur Abdichtung (21) enthalten kann und eine flexible Lippe, Bürsten oder ein Luftschwert aufweist.

7. Vorrichtung nach einem der vorhergehenden Ansprüche, **dadurch gekennzeichnet, dass** der Feldkonzentrator (13) über mindestens eine Aufladespule (23) verfügt, über die mindestens eine Feldkonzentratorbatterie (24) geladen werden kann.

## Claims

1. Device for inductive energy transfer (10) for a vehicle (17) from at least one emitter coil (11) to at least one receiver coil (12) of the vehicle (17), which is spaced apart from the at least one emitter coil (11), **characterized in that** a field concentrator (13) is disposed between the at least one emitter coil (11) and the at least one receiver coil (12), wherein the field concentrator (13) is designed to be mobile and comprises a sensor (22), by means of which the position of the vehicle (17) can be detected by the field concentrator (13), and the field concentrator (13) has a device for cleaning (25), wherein, by means of the device for cleaning (25), it is ensured that no undesired objects, such as for example metals, foils or animals, are located in the intermediate space (14) between field concentrator (13) and receiver coil (12) of the vehicle (17).

2. Device according to one of the preceding claims, **characterized in that** the at least one sensor (22) is an optical sensor, an inductive sensor, a radar sensor, an ultrasonic sensor, or a sensor which operates by capacitance.

3. Device according to one of the preceding claims, **characterized in that** the field concentrator (13) is positioned between the at least one emitter coil (11) and the at least one receiver coil (12) in such a way that the variance of the coupling factor between the at least one emitter coil (11) and the at least one receiver coil (12) is as low as possible.

4. Device according to one of the preceding claims, **characterized in that** the field concentrator (13) is equipped with a lifting unit (20).

5. Device according to one of the preceding claims, **characterized in that** the field concentrator (13) is designed to be asymmetrical.

6. Device according to one of the preceding claims, **characterized in that** the device for cleaning (25) may contain a device for sealing (21) and comprises a flexible lip, brushes, or an air blade.

7. Device according to one of the preceding claims, **characterized in that** the field concentrator (13) comprises at least one charging coil (23), by means of which the at least one field concentrator battery (24) can be charged.

## Revendications

1. Dispositif de transfert d'énergie par induction (10) pour véhicule (17) depuis au moins une bobine d'émission (11) vers au moins une bobine de réception (12) du véhicule (17) qui est espacée de ladite au moins une bobine d'émission (11), **caractérisé en ce qu'**un concentrateur de champ (13) est disposé entre ladite au moins une bobine d'émission (11) et ladite au moins une bobine de réception (12), dans lequel le concentrateur de champ (13) est réalisé sous forme mobile et comprend un capteur (22) par l'intermédiaire duquel la position du véhicule (17) peut être détectée au moyen du concentrateur de champ (13), et le concentrateur de champ (13) comporte un dispositif de nettoyage (25), dans lequel il est fait en sorte, au moyen du dispositif de nettoyage (25), qu'aucun objet indésirable tel que des métaux, des feuilles ou des animaux ne se trouve dans l'espace intermédiaire (14) entre le concentrateur de champ (13) et la bobine de réception (12) du véhicule (17) .

2. Dispositif selon l'une des revendications précédentes, **caractérisé en ce que** ledit au moins un capteur (22) est un capteur optique, un capteur à induction, un capteur radar, un capteur à ultrasons ou un capteur fonctionnant de manière capacitive.

3. Dispositif selon l'une des revendications précédentes, **caractérisé en ce que** le concentrateur de champ (13) est positionné entre ladite au moins une bobine d'émission (11) et ladite au moins une bobine de réception (12) de telle manière que la variance du facteur de couplage entre ladite au moins une bobine d'émission (11) et ladite au moins une bobine de réception (12) soit aussi faible que possible.

4. Dispositif selon l'une des revendications précédentes, **caractérisé en ce que** le concentrateur de champ (13) est équipé d'une unité de levage (20).

5. Dispositif selon l'une des revendications précédentes, **caractérisé en ce que** le concentrateur de champ (13) est réalisé de manière asymétrique.

6. Dispositif selon l'une des revendications précédentes, **caractérisé en ce que** le dispositif de nettoyage (25) peut contenir un dispositif d'étanchéité (21) et comporte une lèvre flexible, des brosses ou une lame d'air.

7. Dispositif selon l'une des revendications précédentes, **caractérisé en ce que** le concentrateur de champ (13) comporte au moins une bobine de charge (23) par l'intermédiaire de laquelle au moins une batterie (24) du concentrateur de champ peut être chargée.
